**Europäisches Patentamt**

**European Patent Office**

**Office européen des brevets**

(19)

(11) Veröffentlichungsnummer: **0 038 509**
**A1**

(12) # EUROPÄISCHE PATENTANMELDUNG

(21) Anmeldenummer: 81102840.6

(22) Anmeldetag: 14.04.81

(51) Int. Cl.³: **H 04 L 5/16**

(30) Priorität: 18.04.80 GB 8012812

(43) Veröffentlichungstag der Anmeldung:
28.10.81 Patentblatt 81/43

(84) Benannte Vertragsstaaten:
DE FR GB NL SE

(71) Anmelder: Hewlett-Packard Limited

South Queensferry West Lothian EG30 9TG
Scotland(GB)

(72) Erfinder: Roubaud, Peter Raymond
24, Stewart Place Kirkliston
West Lothian EH 29 9BQ Schottland(GB)

(72) Erfinder: Guest, David Hubert
31 Newmills Crescent Balerno
Midlothian EH14 5SX Schottland(GB)

(74) Vertreter: Schulte, Knud, Dipl.-Ing.
Lindenstrasse 16
D-7261 Gechingen/Bergwald(DE)

(54) Logikschaltung zum Vermeiden eines Verriegelungszustandes zwischen voneinander entfernten Datenbussen.

(57) Eine Logikschaltung ist in einem Voll-Duplex-Datenkanalsystem verbunden, welches zur Datenübertragung zwischen einem lokalen Datenbus (16) und einem entfernten Datenbus (16') dient. Sie verhindert eine Verriegelung des Systems in einem Logikzustand. Die Schaltung enthält je einen Verknüpfungsschaltkreis (25, 25') für den abgehenden und den ankommenden Datenkanal (23, 23'). Wenn eine angeschlossene Datenquelle ein bestätigendes Binärsignal an ihren Datenbus abgibt, wird dieses durch den zugeordneten Verknüpfungsschaltkreis über den einen Datenkanal an den anderen Datenbus übertragen, falls nicht vom anderen Datenbus bereits ein bestätigendes Binärsignal auf dem erstgenannten Datenbus hervorgerufen wurde. Somit wird eine Rückübertragung des bestätigenden Binärsignales vermieden, welche zur Verriegelung des Systems in einem Logikzustand führen würde.

EP 0 038 509 A1

Croydon Printing Company Ltd.

COMPLETE DOCUMENT

Int. Az.: Ltd. 19/81                    8. April 1981

LOGIKSCHALTUNG ZUM VERMEIDEN EINES VERRIEGELUNGSZUSTANDES
ZWISCHEN VONEINANDER ENTFERNTEN DATENBUSSEN

Die Erfindung betrifft eine Logikschaltung zum Vermeiden eines Verriegelungszustandes zwischen voneinander entfernten Datenbussen eines Datenübertragungssystemes, und zwar eines Duplex-Systems für digitale Signale, welches zwischen Datenbussen aufgebaut ist, die einen beliebigen Abstand voneinander haben. In einem solchen System dient die neue Logikschaltung dazu, in beiden Richtungen eine Datenübertragung zu ermöglichen und dabei eine Verriegelung des Datenbussystemes in dem einen Logikzustand zu vermeiden.

Bei einer typischen Anwendung enthält ein Datenbus mehrere Leitungen, die mehrere Geräte parallel verbinden, um eine bitparallele Datenübertragung in beiden Richtungen über jede der Busleitungen zu ermöglichen, wobei jedes Gerät als Datenquelle arbeiten kann und binäre Signale über den Datenbus an eines oder alle der übrigen Geräte übertragen kann, die dann als Datenaufnehmer arbeiten. Ein solches Datenbussystem ist definiert im IEEE Standard Digital Interface for Programable Instrumentation (IEEE-Standard 488). Es verwendet "negative Logik", wobei der bestätigende ("wahre") Logikzustand durch den Nennspannungspegel von 0 V und der nicht-bestätigende ("falsche") Logikzustand durch den Nennspannungspegel von + 5 V dargestellt wird. Die Busleitungen werden im nicht-bestätigenden Logikzustand durch Treiberschaltungen mit "offenem Kollektor" auf + 5 V gehalten. Wenn irgendeiner Busleitung durch irgendeine Datenquelle ein den bestätigenden Logikzustand darstellendes Signal zugeführt wird, so wird diese Leitung auf 0 V gesetzt, und zwar unabhängig von dem Nennspannungspegel von + 5 V an den Ausgängen der übrigen mit der Busleitung verbundenen Geräte. Wegen beträchtlicher Kabelkapazitäten und anderer schaltungstechnischer Begrenzungen sind solche Bussysteme beschränkt auf die Verbindung von etwa 15 Geräten, die an der Datenübertragung über Abstände von etwa 20 m teilnehmen. Es ist somit wünschenswert, ein Kommunikationssystem zur Datenübertragung in beiden Richtungen zwischen zwei oder mehreren Datenbussen aufzubauen, wobei sich die Bussysteme voneinander in beliebigen Abständen befinden und mit verschiedenen Geräten verbunden sind.

Um eine solche Datenübertragung zwischen entfernten Datenbussen herzustellen, ist es erforderlich, den Nennspannungspegel von einer oder mehreren parallelen Leitungen direkt zwischen den Datenbussen zu übertragen, wozu die Logikschaltung nach der Erfindung dient.

Bei vielen Anwendungen ist es nicht wünschenswert, die entfernten Datenbusse direkt zu verbinden, weil beispielsweise Impedanzeigenschaften der angeschlossenen Geräte die Signaleinspeisung über lange Kabel nicht zulassen oder weil die an verschiedene Datenbusse angeschlossenen Geräte unterschiedliche Signalpotentiale oder Chassis-Massepotentiale haben. In diesen Fällen können die Datenkanäle Modems, Sende/Empfangseinrichtungen, Transformatoren, optoelektronische Koppler oder dergleichen aufweisen. Dabei müssen die in beiden Richtungen Daten übertragenden Kanäle aufgeteilt werden in getrennte, jeweils nur in eine Richtung übertragende Datenkanäle (voller Duplexbetrieb). Das heißt, es wird ein von einem lokalen Bus zu einem entfernten Bus abgehender Datenkanal und ein von dem entfernten Bus am lokalen Bus ankommender Datenkanal verwendet.

Diese Datenkanäle können in verschiedner Weise ausgebildet sein, ohne daß dieses von Bedeutung für die Erfindung wäre. Grundsätzlich kann jedes Übertragungsverfahren verwendet werden, welches den Logikzustand am Eingang an den Ausgang übertragen kann. Typischerweise werden dabei Treiberschaltungen für jeden Datenbus sowie Datenbusaufnehmer zwischen den Enden dieser Übertragungskanäle und Datenbusse eingefügt.

Der Zweck eines solchen Duplex-Kommunikationssystemes mit entfernten Datenbussen ist es, den bestätigenden Logikzustand des lokalen Datenbusses auf den entfernten Datenbus bzw. denjenigen des entfernten Datenbusses auf den lokalen Datenbus zu übertragen. Falls zwei getrennte Datenbusse in der beschriebenen Weise durch abgehende und ankommende Übertragungskanäle direkt verbunden wären, entstünde eine Kommunikationsschleife, bei der beide Datenbusse auf dem Nennspannungspegel 0 V für den bestätigenden Logikzustand verriegelt würden.

Es ist demgegenüber eine wesentliche Aufgabe der Erfindung, eine Logikschaltung vorzusehen, die innerhalb getrennter abgehender und ankommender Übertragungskanäle für digitale Signale verbunden werden kann, die sich zwischen entfernten Datenbussystemen in der beschriebenen Weise erstrecken, so daß eine Datenübertragung über die Übertragungskanäle von dem einen Datenbus zum anderen möglich ist, ohne ein solches System in einem der Logikzustände zu verriegeln.

Diese Aufgabe wird gelöst durch eine Logikschaltung entsprechend Anspruch 1.

Es versteht sich, daß eine solche Logikschaltung entweder an den lokalen Enden oder an den entfernten Enden der beiden Datenkanäle oder an anderen Punkten zwischen beiden Datenbussen angeschlossen werden könnte.

Entsprechend der bevorzugten Ausführungsform nach Anspruch 2 ist die Logikschaltung aus zwei symmetrischen, getrennt angeschlossenen Modulen aufgebaut. Dabei sind beide Datenbusse in der gleichen Weise mit den Datenkanälen verbunden, und etwaige in diesen Datenkanälen auftretende Verzögerungen sind für beide Logikmodule gleich.

Wenn die Logikschaltung verwendet werden soll bei Datenbussen, die in der vorgenannten Weise "negative" Logik verwenden, aber zwischen den Datenbussen "positive" Logik verwendet wird, kann vorzugsweise vorgesehen werden, daß die Übertragungsfunktionen zwischen den ersten Ausgängen, den ersten Eingängen und den zweiten Eingängen der ersten und zweiten Logikschaltkreise NICHT-ODER-Funktionen sind, und die Übertragungsfunktionen zwischen den zweiten Ausgängen und den zweiten Eingängen jedes der ersten und zweiten Logikschaltkreise sind invertierende Funktionen.

Entsprechend einer anderen bevorzugten Ausführungsform kann vorgesehen werden, daß der Verriegelungssignalweg der ersten und zweiten Logikschaltkreise eine derartige Verzögerung hat, daß ein Signal am zweiten Eingang eines der Logikschaltkreise wirksam wird am Verriegelungseingang des betreffenden Logikschaltkreises, bevor es an dessen erstem Signaleingang wirksam wird.

Diese Zeitbeziehung zwischen den Ausbreitungsverzögerungen an den Eingängen der Logikschaltkreise wäre nicht erforderlich, falls Abtast- oder Unterbrechereinrichtungen zwischen den Logikschaltkreisen vorgesehen werden, welche den entsprechenden Singalweg für eine ausreichende Zeitspanne unterbrechen, bis das Verriegelungssignal am entsprechenden Logikschaltkreis wirksam geworden ist.

In Fällen, in denen die neue Logikschaltung in Verbindung mit Datenbussen verwendet werden soll, welche im wesentlichen gleichzeitig von externen Datenquellen Signale empfangen, die den bestätigenden Logikzustand darstellen, ist Vorsorge zu treffen für eine abwechselnde Unterbrechung der Signalwege, beispielsweise durch geeignete Abtast- oder Unterbrechereinrichtungen, so daß diese Datensignale sich nicht gleichzeitig an den Eingängen beider Logikschaltkreise auswirken.

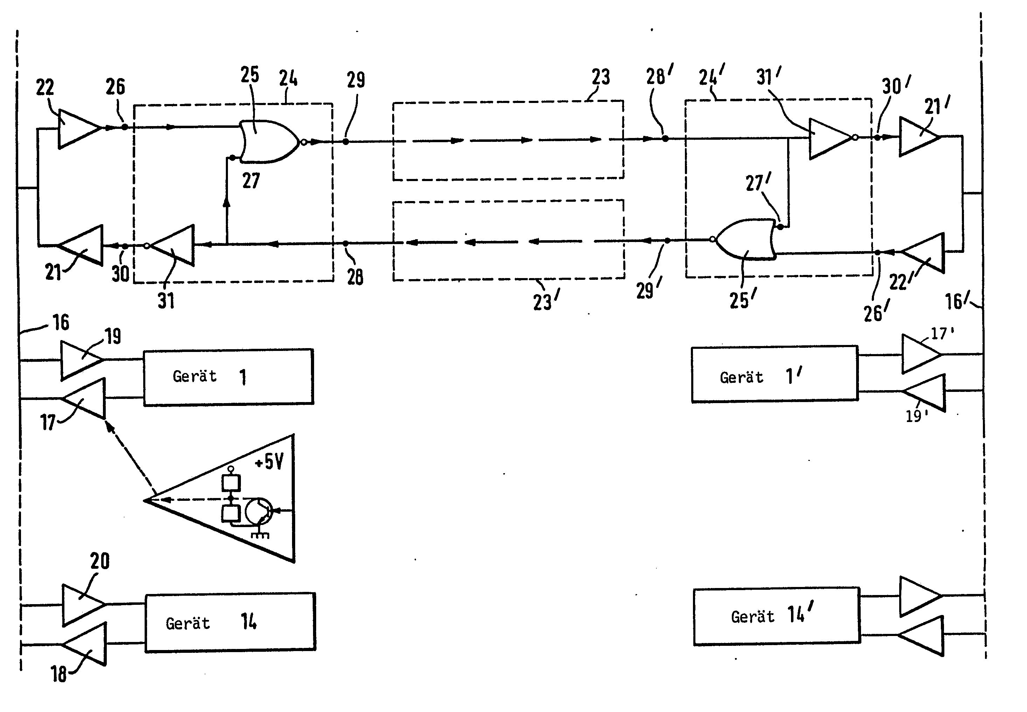

Im folgenden wird die Erfindung anhand eines bevorzugten Ausführungsbeispiels unter Bezugnahme auf die Zeichnung erläutert. Diese stellt ein Datenübertragungssystem mit vollem Duplexbetrieb zwischen voneinander entfernten Datenbussen für binäre Signale dar, wobei entsprechend der Erfindung ein Blockierzustand der Datenbusse beim Spannungspegel + 5 V der übertragenen Signale vermieden wird.

Verschiedene Datenquellen/Datenaufnehmer 1 bis 14 sind durch einen lokalen Datenbus 16 parallel geschaltet, der beispielsweise weitere nicht dargestellte Leitungen für eine bitserielle, byte-parallele Datenübertragung aufweisen kann. Somit kann ein lokales busorientiertes Übertragungssystem in beiden Richtungen über eine Entfernung von bis zu etwa 20 m aufgebaut werden. In diesem System kann jedes Gerät 1 bis 14 als Datenquelle für die Busleitung 16 wirken, während eines oder alle anderen angeschlossenen Geräte die Signale von dieser Datenquelle über die Datenbusleitungen aufnehmen können. Die Datenübertragung zwischen diesen Geräten kann durch ein Protokoll gesteuert werden, das Betriebsfolgen über verschiedene ähnliche Leitungen umfaßt, was indessen kein Teil der Erfindung ist. Jedes dieser Geräte ist mit den Datenbussen über Treiberschaltungen 17, 18 und Empfängerschaltungen 19, 20 verbunden, die typischerweise in herkömmlicher Transistortechnik aufgebaut sind. Im passiven Zustand eines Gerätes wird der Datenbus auf dem Nennspannungspegel H von + 5 V gehalten, der den nicht-bestätigenden Logikzustand definiert. Ein von irgeneinem dieser Geräte empfangenes Signal, welches den bestätigenden Logikzustand darstellt, ergibt eine Masseverbindung zu der betreffenden Datenbusleitung über einen Transistor in einer Treiberschaltung mit "offenem Transistor". Somit dominiert der Nennspannungspegel L von 0 V bzw. er entfernt den Spannungspegel H, falls dieser durch irgendeine der übrigen Treiberschaltungen auf dem Datenbus eingestellt worden war.

In einem Abstand, der bei weitem 20 m überschreiten kann, ist eine entsprechende Busleitung 16' vorgesehen, welche die Geräte 1' bis 14' innerhalb eines Abstandes von bis zu 20 m parallel schaltet. Somit wird ein entferntes Datenbussystem in der gleichen Weise aufgebaut, wie es für das lokale Ende beschrieben wurde.

Vom lokalen Datenbus 16 zum entfernten Datenbus 16' erstreckt sich ein "abgehender" Übertragungskanal für binäre Daten mit identischen Bauteilen wie ein "ankommender" Übertragungskanal, der sich von dem entfernten Datenbus 16' zu dem lokalen Datenbus 16 erstreckt. Jeder Übertragungskanal liefert Signale an einen der Datenbusse über Treiberschaltungen 21 oder 21' und empfängt Datensignale von einem der Datenbusse über Empfängerschaltungen 22 oder 22'. Die Treiberschaltungen und Empfängerschaltungen können in herkömmlicher Weise aufgebaut sein und dem IEEE-Standard 488 entsprechen.

Beide Übertragungsstrecken umfassen binäre Datenkanäle 23 bzw. 23'. Diese binären Kanäle können verschiedene Formen annehmen, beispielsweise Sender, Empfänger und Verzögerungselemente in den Übertragungswegen enthalten, bilden aber für sich nicht das Wesen der Erfindung.

Ein erster modularer Vierpol 24 enthält ein NICHT/ODER-Glied 25. Dieses hat einen Eingang 26, der mit dem Ausgang eines Verstärkers 22 verbunden ist, einen Eingang 27 für Verriegelungssignale, der mit einem zweiten Eingang 28 über einen Verriegelungssignalweg verbunden ist, und einen Ausgang 29, der mit einem Eingang des abgehenden Übertragungskanals verbunden ist. Der Verriegelungssignalweg ist an einem Ende verbunden mit dem Ausgang des ankommenden Signalkanals. Ein Zweig des Vierpols 24 erstreckt sich von dem zweiten Eingang 28 zu einem zweiten Ausgang 30 und enthält einen Umkehrverstärker 31.

Ein zweiter modularer Vierpol gleichen Aufbaus ist an dem entfernten Ende des Systems in der gleichen Weise verbunden, wie es für den ersten Vierpol beschrieben wurde.

Die verschiedenen Logikglieder können in bekannter Transistorlogik ausgebildet werden, und es versteht sich, daß sie durch andere Kombinationen von Logikgliedern ersetzt werden können, solange im Ergebnis die gleichen Logikfunktionen ausgeführt werden.

Der beschriebene Vierpol arbeitet in dem dargestellten Übertragungssystem wie folgt:
Angenommen beide Datenbusse befinden sich in ihren passiven Zuständen und werden auf dem Spannungspegel H von + 5 V durch Treiberschaltungen 17, 17' gehalten, so treten an den Ausgängen 29, 29' der NICHT/ODER-Glieder 25 und 25' Signale mit dem Nennspannungspegel L von 0 V auf. Außerdem werden Signale mit dem Nennspannungspegel H durch die Umkehrverstärker 31, 31' den Bustreiberschaltungen 21, 21' und den Datenbussen 16, 16' zugeführt. Im Ergebnis befinden sich beide Binärkanäle 23, 23' und die Verriegelungseingänge der NICHT/ODER-Glieder auf Massepotential, und die Datenbusse bleiben auf einem positiven Spannungspegel. Es wird nun angenommen, daß ein Gerät ein Binärsignal mit einem Spannungspegel L auf dem entfernten Datenbus 16' bewirkt. Der Binärkanal 23' schaltet auf einen Spannungspegel H und bewirkt, daß ein Spannungspegel L in der gewünschten Weise auf dem Datenbus 16 erscheint. Es ist wichtig, daß wegen des Spannungspegels H am Verriegelungseingang 27 des NICHT/ODER-Gliedes 25 der Binärkanal 23 auf den Spannungspegel H umschalten kann, obgleich ein Signal mit dem Spannungspegel L vom Umkehrverstärker 31 über die Treiberschaltung 21 und die Empfängerschaltung 22 an den Signaleingang des NICHT/ODER-Gliedes 25 übertragen wird.

Dadurch wirken die NICHT/ODER-Glieder 25 und 25' als Blockierglieder, welche verhindern, daß sich das ganze Duplexsystem in einem Logikzustand verriegelt.

Bei jedem der NICHT/ODER-Glieder ist die Ausbreitungsverzögerung im Eingangssignalweg kleiner als diejenige des Umkehrverstärkers, der Treiberschaltung und der Empfängerschaltung zusammengenommen, so daß ein Signal am zweiten Eingang 28, 28' jedes Vierpols 24, 24' sich früher am Verriegelungseingang 27, 27' eines NICHT/ODER-Gliedes auswirkt als am entsprechenden Signaleingang 26, 26'.

Falls nunmehr irgendeines der Geräte 1 bis 14 ein Datensignal mit dem Spannungspegel L auf dem Datenbus 16 abgibt, wird dieser Spannungspegel nicht zum Datenbus 16' übertragen, da immer noch der Spannungspegel H am Verriegelungseingang 27 des NICHT/ODER-Gliedes 25 anliegt. Da die richtigen Spannungspegel an beiden Datenbussen vorliegen, spielt es keine Rolle, daß dieses Signal von den Geräten 1 bis 14 noch nicht wirksam wird. Wenn danach keines der Geräte 1' bis 14' weiterhin ein Datensignal mit dem Spannungspegel L übertragen soll, schaltet der Binärkanal 23 um auf den Spannungspegel H und bewirkt dadurch, daß ein Spannungspegel L von irgendeinem der Geräte auf dem Datenbus 16 korrekt auf dem Datenbus 16' erscheint.

Im Rahmen der Erfindung kann neben möglichen anderen Änderungen der dargestellten Schaltungsanordnung folgendes vorgesehen werden:

Die Logikschaltungen des Vierpols könnten durch andere Kombinationen von Verknüpfungsgliedern mit den gleichen Funktionen ersetzt werden.

Wenn ebenfalls "negative" Logik in den Binärkanälen implementiert werden soll, müssen die NICHT/ODER-Glieder durch ODER-Glieder ersetzt werden, und es müßte ein Umkehrverstärker in jedem Verriegelungskanal vorgesehen werden, und die Umkehrverstärker in den Ausgangssignalzweigen der Vierpole müßten entfallen.

Wenn die Beziehung zwischen den Spannungspegeln und den Logikzuständen umgekehrt wird, können Umkehrverstärker an beiden Enden der Obertra- gungskanäle angeschlossen werden.

Als Alternative zur Einfügung korrekter relativer Verzögerungen in den Verriegelungssignalwegen sollten in den Binärkanälen Einrichtungen vorgesehen werden, welche die Datenübertragung verhindern, bis das richtige Verriegelungssignal am Verriegelungseingang des betreffenden NICHT/ODER-Gliedes wirksam geworden ist.

Bei Anwendungen, bei denen im wesentlichen im gleichen Zeitpunkt an beiden Datenbussen Signale auftreten können, die den bestätigenden Logikzustand darstellen, müssen Einrichtungen wie beispielsweise Unterbrecher oder Abtaster in beiden Obertragungskanälen vorgesehen werden, welche abwechselnd die Signalübertragung unterbinden.

Schließlich ist die neue Logikschaltung nützlich zur Vermeidung einer Verriegelungsbedingung in Verbindung mit irgendeinem getrennten Paar von Signalübertragungswegen, welche zwischen entfernten Enden eine Duplex- Kommunikation ermöglichen.

Auch kann das der Erfindung zugrunde liegende Prinzip implementiert werden bei anderen digitalen Signalen, beispielsweise bei ternären Signalen oder solchen, deren Logikzustände durch Frequenzmodulation kodiert sind.

Patentansprüche

1. Logikschaltung zum Vermeiden eines Verriegelungszustandes zwischen voneinander entfernten Datenbussen des folgenden Datenübertragungssystemes:

Ein von einem lokalen Datenbus (16) abgehender Datenkanal überträgt Binärsignale nur in Richtung eines entfernten Datenbusses (16'),

ein von dem entfernten Datenbus ankommender Datenkanal überträgt Binärsignale nur in Richtung des lokalen Datenbusses, der lokale Datenbus ist wenigstens mit einer Datenquelle (1 + 17) und einem Datenaufnehmer (1 + 19) im lokalen Bereich verbunden, und der entfernte Datenbus ist wenigstens mit einer Datenquelle (1' + 17')und einem Datenaufnehmer (1' + 19') im entfernten Bereich verbunden,

jeder Datenbus hat einen ersten, den nicht bestätigenden Logikzustand darstellenden Spannungspegel, wenn alle an diesen angeschlossenen Datenquellen Binärsignale mit dem ersten Spannungspegel abgeben,

jeder Datenbus hat einen zweiten, den bestätigenden Logikzustand darstellenden Spannungspegel, wenn wenigstens eine an den betreffenden Datenbus angeschlossene Datenquelle an diese ein Binärsignal mit dem zweiten Spannungspegel abgibt,

die Logikschaltung enthält zwei identische Verknüpfungsschaltkreise (24; 24'),

sie enthält erste Eingänge und Ausgänge (26; 30') zur Verbindung in dem abgehenden Datenkanal (23) und zweite Eingänge und Ausgänge (26', 30) zur Verbindung in dem ankommenden Datenkanal, der erste Verknüpfungsschaltkreis (24) hat einen Verriegelungseingang (27) für vom ankommenden Datenkanal abgeleitete Binärsignale,

der zweite Verknüpfungsschaltkreis hat einen Verriegelungseingang (27') für vom abgehenden Datenkanal abgeleitete Binärsignale,

die ersten und zweiten Verknüpfungsschaltkreise haben folgende Übertragungsfunktionen:

an den abgehenden Datenkanal wird für den entfernten Datenbus ein Binärsignal mit dem zweiten Spannungspegel abgegeben und dabei verhindert, daß dieses über den ankommenden Datenkanal an den lokalen Datenbus zurückübertragen wird, falls irgendeine der lokalen Datenquellen ein Binärsignal mit dem zweiten Spannungspegel an den lokalen Datenbus abgibt und falls keine entfernte Datenquelle ein Binärsignal mit dem zweiten Spannungspegel auf dem lokalen Datenbus hervorgerufen hat,

an den ankommenden Datenkanal wird ein Binärsignle für den lokalen Datenbus abgegeben und dabei verhindert, daß dieses über den abgehenden Datenkanal an den entfernten Datenbus zurückübertragen wird, falls irgendeine der entfernten Datenquellen ein Binärsignal mit dem zweiten Spannungspegel an den entfernten Datenbus abgibt und keine lokale Datenquelle ein Binärsignal mit dem zweiten Spannungspegel auf dem entfernten Datenbus hervorgerufen hat.

2.  Logikschaltung nach Anspruch 1, bei welcher die Verknüpfungsschaltkreise als getrennte modulare Einheiten ausgebildet sind:
Die erste modulare Einheit (24) enthält
- einen ersten Eingang, der den ersten Eingang (26) der Logikschaltung bildet, und einen ersten Ausgang (29) zur Verbindung am lokalen Ende des abgehenden Datenkanals,
einen zweiten Eingang (28) zur Aufnahme von Binärsignalen am lokalen Ende des ankommenden Datenkanals,
einen zweiten Ausgang (30), der den zweiten Ausgang der Logikschaltung bildet;
die zweite modulare Einheit (24') enthält
einen ersten Eingang (26'), der den zweiten Eingang der Logikschaltung bildet und
einen zweiten Ausgang (29') zur Verbindung am entfernten Ende des ankommenden Datenkanals,
einen zweiten Eingang (28') zur Aufnahme von Binärsignalen am entfernten Ende des abgehenden Datenkanals,
und einen zweiten Ausgang (30'), der den ersten Ausgang der Logikschaltung bildet.

3. Logikschaltung nach Anspruch 2, bei welcher die Übertragungsfunktionen zwischen den ersten Ausgängen (29, 29') und dem ersten und dem zweiten Eingang jedes Verknüpfungsschaltkreises (24; 24') NICHT/ODER-Funktionen sind und die Übertragungsfunktionen zwischen dem zweiten Eingang (28; 28') und dem zweiten Ausgang (30, 30') jedes der Verknüpfungsschaltkreise Umkehrfunktionen sind.

4. Logikschaltung nach Anspruch 1 oder 2, bei welcher die Übertra-gungsfunktion zwischen dem ersten Ausgang (29; 29'), dem ersten Eingang (26, 26') und dem Verriegelungseingang (27; 27') jedes Verknüpfungsschaltkreises eine ODER-Funktion ist, die Übertragungs-funktionen der Verriegelungssignalwege der ersten und zweiten Verknüpfungsschaltkreise invertierend sind und die Binärsignale von den zweiten Ausgängen (30; 30') der ersten und zweiten Verknüpfungsschaltkreise den Binärsignalen an den zweiten Eingängen (27; 27') der entsprechenden Verknüpfungsschaltkreise entsprechen.

5. Logikschaltung nach einem der Ansprüche 1 bis 4, dadurch g e k e n n z e i c h n e t , daß der Verriegelungssignalweg jedes der ersten und zweiten Verknüpfungsschaltkreise (24; 24') eine derartige Verzögerung hat, daß ein Binärsignal am zweiten Eingang (28; 28') eines der Verknüpfungsschaltkreise am Verriegelungseingang des Verknüpfungsschaltkreises wirksam wird, bevor es am ersten Eingang (26; 26') wirksam wird.

1/1

Europäisches Patentamt

**EUROPÄISCHER RECHERCHENBERICHT**

**0038509**

Nummer der Anmeldung

**EP 81 10 2840**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | ELECTRICAL DESIGN NEWS, Band 24, Heft 2, Januar 1979, DENVER (US) L.W. BERKBIGLER: "Simplify mini or $\mu$C bus extensions", Seiten 106-108  * Insgesamt * | 1-5 |

**KLASSIFIKATION DER ANMELDUNG (Int. Cl.³)**

H 04 L 5/16

**RECHERCHIERTE SACHGEBIETE (Int. Cl.³)**

H 05 L 5/16
     5/14
     5/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 30.07.1981 | Dr. STRASSEN |

EPA form 1503.1  06.78